# EUROPEAN PATENT APPLICATION

(11) **EP 2 985 535 A1**
(43) Date of publication of application: **17.02.2016**
(21) Application number: 15167023.9
(22) Date of filing: 08.05.2015
(51) Int. Cl.: F24D 19/00, F24D 19/10, F24D 12/02, F24D 10/00

(54) **FLUID-HEATING SYSTEM**

(30) Priority: 23.07.2014 GB 201413046
(71) Applicant: Thermal Integration Limited, Sudbury Suffolk CO10 2XW (GB)
(72) Inventor: Hanson-Graville, Richard, Sudbury, Suffolk CO10 2XW (GB)
(74) Representative: Carridge, Andrew Edward

(57) **Abstract**

A fluid-heating system has a plurality of heating units (5) in which each heating unit is configured to generate, in use, a first output of a heated fluid and/or a second output of a heated fluid, the combination of the first and second outputs generating a unit output and the combination of unit outputs from each unit generating a total system output, and in which each heating unit comprises a controller for controlling its first output. A source of the heated primary fluid (3) arranged to supply the heated primary fluid to each heating unit, such that each heating unit can utilise the heated primary fluid to generate its first and second outputs. The system is configured to regulate the total system output by controlling the first output of each heating unit.

## Description

This invention relates to a fluid-heating system, a heating unit and a method for heating fluid. The apparatus may be used for central heating or domestic hot water.

### BACKGROUND TO THE INVENTION

For some years, there has been an increased use of centralised boiler plants in property developments. Advanced technologies such as Combined Heat and Power (CHP), biomass, extract air heat pumps, waste incineration and solar, that are mostly uneconomical to employ in individual properties, can be utilised and combined to generate heat to numerous properties or dwellings.

Hydraulic (or Heat) Interface Units (HIUs) can be fitted into each property to take the heat from a central plant and use this to provide central heating and hot water to taps in each property.

HIUs can therefore be part of a district heating system in which hot water from the central boiler plant is circulated to each HIU and each HIU facilitates the transfer of heat to central heating water and/or to mains-pressure water, using heat exchangers. Typically a HIU will have a central heating heat exchanger and a mains-pressure water (or domestic hot water) heat exchanger. The HIU can provide and control central heating and domestic hot water in each individual property.

The number of properties that can be serviced by a central boiler plant depends on the size of the boiler plant. The greater the number of properties, the larger the central boiler plant has to be to meet the demands of each property. It is particularly important that the central boiler plant is able to meet the peak load of the district heating system. The size of the central boiler plant that is required to heat properties in a district heating system, or the number of properties that can be serviced by a particular-sized central boiler plant, often dictates whether or not such a system is viable.

With this in mind, it is desirable to increase the efficiency of district heating networks and reduce costs associated with installing and running district heating systems.

### SUMMARY OF THE INVENTION

The invention provides a fluid heating system, a method and a heating unit as defined in the appended independent claims. Advantageous or preferred features are set forth in dependent claims.

The invention may thus provide a fluid-heating system, apparatus or network. The apparatus may comprise a plurality of heating units. Each heating unit may be configured to generate, in use, a first output of heated fluid, and/or a second output of heated fluid. A source of heated primary fluid may be arranged to supply (or input) heated primary fluid to each heating unit. Each heating unit may utilise the heated primary fluid to generate its first output and second output.

The first output may be a central heating output (or a supply of central heating fluid) and the second output may be a domestic hot water output (or a supply of domestic hot water).

Each unit is preferably a hydraulic (or heat) interface unit.

Each heating unit may be configured to generate the first output by transferring heat from the heated primary fluid to a secondary fluid. For example, the unit may comprise a heat exchanger (which may be a first heat exchanger) for transferring heat from the heated primary fluid to the secondary fluid. The unit may then supply or output the heated secondary fluid to where it is required. The heated secondary fluid may flow or circulate to appliances, such as central heating appliances (e.g. radiators or under floor heating).

Alternatively, each heating unit may be configured to generate the first output by outputting, or supplying, the heated primary fluid. Rather than the heated primary fluid being used to heat secondary fluid, the heated primary fluid could flow from the unit to where it is required. In use, the heated primary fluid may flow or circulate to appliances, such as central heating appliances (e.g. radiators or under floor heating).

Each heating unit may be configured to generate the second output by transferring heat from the heated primary fluid to a tertiary fluid. The unit may achieve this by having a heat exchanger (which may be a second heat exchanger) for transferring heat from the heated primary fluid to the tertiary fluid. In use, the unit may supply the heated tertiary fluid to where it is required. For example, the heated tertiary fluid may flow or ciculate to outlets, such as hot water taps or showers.

A unit output (or load) may thus be a combination, or addition, of the first output and the second output. A total system output (or load) may thus constitute a combination, or addition, of the unit outputs from each heating unit.

Each heating unit may comprise a primary conduit for conveying (or arranged to convey) a primary fluid through the unit. For example, the primary conduit may be arranged to convey the primary fluid through the first heat exchanger and/or through the second heat exchanger. The unit may comprise a secondary conduit for conveying (or arranged to convey) a secondary fluid through the first heat exchanger. The unit may comprise a tertiary conduit for conveying (or arranged to convey) tertiary fluid through the second heat exchanger.

Each unit preferably comprises a controller for controlling the first output. For example, the controller may be a flow rate controller. The controller may comprise a valve or a variable speed pump.

In a preferred embodiment, if it is desired to reduce the first output, the controller may be arranged to reduce flow rate of the secondary fluid through the first heat exchanger.

Alternatively or additionally, the controller may be arranged to restrict flow of primary fluid through the unit. For example, it may reduce the flow rate of the primary fluid through the first heat exchanger. Alternatively, if the unit does not heat a secondary fluid, the flow rate controller may restrict supply of heated primary fluid to heating appliances.

The system may be configured such that each heating unit can control its first output. Reducing the first output may thus reduce the unit output of that unit, and if the unit output of every unit in the system is reduced, the total system output may be significantly reduced.

Preferably, the system is configured to reduce the first output of each heating unit to the same extent. However, the system could be configured such that reductions in the first outputs of heating units are not equivalent. It is also envisaged that the system could be configured to reduce first outputs in a sub-set of the plurality of heating units, such that some heating units do not reduce their first outputs.

In a preferred embodiment, each heating unit comprises an output sensor or sensors for sensing the unit output. The system may be configured to monitor the total system output based on the unit output of each unit, and effect the control of the first output of each unit, such that the total system output does not exceed a predetermined limit (or level), or peak system load.

In order to calculate unit output, the heating unit may comprise a plurality of sensors, such as temperature sensors, and optionally flow-rate sensors.

For example, if the first and second heat exchangers are arranged in series (as described in more detail below), the unit may comprise a temperature sensor arranged to measure the temperature of the primary fluid before it has flowed through either the first or second heat exchangers (a primary in temperature sensor), a temperature sensor arranged to monitor the temperature of the primary fluid that has flowed through the first and second heat exchangers (a primary out temperature sensor) and a flow rate sensor arranged to monitor flow rate of the primary fluid through the unit (a primary flow sensor). The readings from all three sensors may thus enable total energy transfer to be calculated. The skilled person would appreciate that other sensor configurations could be implemented to determine unit output.

In one embodiment, heating units may be arranged in a communication network, such that electronic signals pass between each heating unit and a server, or between heating units. The communication network may allow the total system output to be monitored and compared with the predetermined level or limit. The heating profile of each unit in the system may then be adjusted, when required (such as when there is a high demand), to avoid the total system output exceeding the predetermined level.

In one embodiment, the system is a district heating network and may be installed in property developments such as blocks of flats.

Preferably, there is a single source of heated primary fluid for supply to each heating unit. The source of heated primary fluid may be a central boiler plant. The central boiler plant may comprise any type of fluid heater, such as Combined Heat and Power (CHP), biomass, extract air heat pumps, waste incineration and solar, and may comprise a plurality of different fluid heaters. The source of heated primary fluid may also comprise a fluid tank or cylinder for storing heated fluid.

In a particularly preferred embodiment, the secondary fluid is central heating fluid and the tertiary fluid is mains-pressure water. So, in use, the primary fluid from the source of heated primary fluid can transfer heat to the central heating fluid (generating a central heating output) and/or the mains-pressure water (generating a domestic hot water output). Alternatively, the central heating fluid could be the heated primary fluid, if there is no heat exchanger for transferring heat to the secondary fluid. A heating unit may be installed into each property or dwelling, to provide central heating and domestic hot water to each property. Consequently, each dwelling may not require its own fluid heater to provide heated primary fluid, instead relying on a central boiler plant that heats primary fluid for delivery to each heating unit.

An advantage of the system of the invention is that it may greatly increase efficiency. For example, it may increase the number of heating units serviced by a central boiler plant, or increase the number of properties that can be supplied by a given central boiler plant.

Each unit in the system may be arranged to provide central heating and/or domestic hot water. Based on the capacity of the source of heated primary fluid, or based on the number of units in the system, the system may have a maximum peak load, or peak system load (which may be the predetermined limit).

To ensure that the maximum peak load is not exceeded, the system may prioritise the second outputs over the first outputs. In the case of central heating fluid and mains-pressure water, this may mean that the heating of mains-pressure water to generate domestic hot water is given priority. Practically, if central heating is reduced temporarily, this is unlikely to lead to a perceptible change to consumers. Domestic hot water, however, should be available at all times, on demand. It may be a perceptible failure of the system if domestic hot water is not available when, for example, a hot tap is turned on in one of the properties. Furthermore, the energy required to heat mains-pressure water is higher than that required to provide central heating.

Domestic hot water priority could be controlled at the level of individual units. For example, if the total system output is high, a demand for domestic hot water at one heating unit may mean that the same unit reduces, or stops, its central heating function. Although this may provide some benefit to the peak load of the system, the benefit may be small.

A greater advantage may be provided by configuring the system such that domestic hot water (or the second output) is prioritised across all heating units (or at least a proportion of the heating units) in the system. In other words, there may be a network-managed domestic hot water (or second output) priority. Supply of central heating fluid (which may be heated secondary fluid, or heated primary fluid) may be reduced, simultaneously, in every heating unit, or a sub-set of heating units. This may greatly reduce the peak system load. A much reduced peak system load may mean that the size of the boiler plant can be greatly reduced, or that the number of heating units serviced by the boiler plant can be greatly increased. In some instances, this may be a decisive factor in determining whether or not a district heating scheme is viable. For example, there may be a desire to expand a district heating network to heat adjoining properties, but no means to add additional boiler plant room output.

Each heating unit may be arranged to communicate its unit output to a server, such that in use, the server can detect the total system output and compare the total system output to the predetermined limit. The server may communicate with each unit to effect a reduction in the first output, if necessary, to prevent the total system output exceeding the predetermined limit.

Alternatively, the plurality of units may form a peer-to-peer network (that does not require a central server) arranged to monitor the total system output, compare the total system output to the predetermined limit and communicate to each unit to effect a reduction in the first output, if necessary, to prevent the total system output exceeding the predetermined limit.

In an alternative embodiment, the system may not compare the total system output with a predetermined value. Rather, a peak system load, or system limit could be calculated during operation, rather than being pre-set or predetermined. This could be achieved by initially running the system without any imposed limits. At such a time that the system load exceeds its physical limits, the result would typically be seen as either a drop in primary fluid temperature (if the limit is the heat input), or as a drop in primary fluid pressures (if the limit is on, for example, pipe size or pump size). When one of these conditions is detected by a heating unit, the system limits will have been reached and this limit can be electronically communicated to all heating units in the network. Each heating unit may then adjust the first output, accordingly.

Consequently, rather than having an output sensor for sensing the unit output, each heating unit may comprise one or more sensors arranged to sense at least one condition or parameter of the primary fluid. Each unit may, for example, comprise a temperature sensor and/or a pressure sensor arranged to sense the temperature and/or pressure of the primary fluid.

However, the system may operate without requiring any electronic communication, or broadcasting, over a communication network. Instead, heating units may be configured to respond to at least one condition of the primary fluid, such as temperature and/or pressure. For example, each unit may control the first output in response to the at least one condition of the primary fluid, and thus regulate the total system output. However, as with systems configured to communicate or broadcast over a network, the effect may still be that all heating units in the system reduce their first outputs at times of peak system load, to provide hot water priority. In essence, this embodiment may use temperatures and pressures to communicate a load on the network (rather than electronic signals). This concept is described in example 4, below.

The system may comprise a primary circuit for conveying primary fluid between the source of heated primary fluid and the heating units. The system may also comprise a secondary circuit (or secondary circuits) for conveying secondary fluid to and from each heating unit, and a tertiary circuit (or tertiary circuits) for conveying tertiary fluid to and from each heating unit. A heating circuit (or central heating circuit) may convey the secondary fluid, or the primary fluid, to heating appliances. A domestic hot water circuit may convey the tertiary fluid (such as mains-pressure water) to outlets such as taps.

The invention may provide a heating unit, such as a HIU, for use, or adapted for use, in a system as defined in any form above.

The heating unit may be a conventional HIU that has been adapted, or modified, for use in a system, as described above.

The heating unit may be in any form as described above. For example, the heating unit may comprise a first heat exchanger for transferring heat from a heated primary fluid to a secondary fluid. It may comprise a second heat exchanger for transferring heat from the heated primary fluid to a tertiary fluid.

If present, the first and second heat exchangers of the unit may be arranged in parallel. For example, heated primary fluid from the source of heated primary fluid could be diverted to the first heat exchanger, the second heat exchanger, or to both. There may be a combination of valves used to divert and control flow through each heat exchanger.

Alternatively, the heat exchangers may be arranged in series, such that primary fluid may flow through both the first and second heat exchangers but is not able to flow only to the first heat exchanger or only to the second heat exchanger. The heat exchangers may be said to be arranged in series in respect of the primary conduit, or the primary conduit may be said to have first and second heat exchangers arranged in series.

If the heat exchangers are arranged in series, it is preferable that the unit comprises a primary flow controller arranged to vary flow of the primary fluid through the unit in response to at least one control signal. Preferably, the primary flow controller is a valve and preferably the control signal is from a temperature sensor arranged to sense the temperature of the tertiary fluid. Flow rate of primary fluid may thus be controlled to ensure that the temperature of the tertiary fluid is heated to a predetermined temperature.

In some embodiments, the heating unit may comprise a controller for controlling the first output. It may comprise one or more output sensors for measuring the unit output. It may comprise one or more sensors arranged to sense at least one condition of the primary fluid (such as a temperature and/or pressure sensor).

The heating unit may be configured to communicate with a computer, such as a server and/or it may be configured to communicate with other heating unit, in a network. The heating unit may be configured to regulate its first output in response to signals from other heating units or a computer (such as a server), and/or in response to at least one condition of the primary fluid.

The invention may provide a method for controlling fluid heating. The method may comprise providing a plurality of heating units and supplying a heated primary fluid to each heating unit such that each heating unit generates a first output of heated fluid and/or a second output of heated fluid.

The first output may result from the heated primary fluid transferring heat to a secondary fluid, the secondary fluid then being supplied to where it is needed, e.g. to central heating appliances. Alternatively, the first output may involve supplying the heated primary fluid being supplied to where it is needed, e.g. to central heating applicances. Each unit may generate a second output resulting from the heated primary fluid transferring heat to a tertiary fluid, the tertiary fluid then being supplied to where it is needed, e.g. to outlests such as taps. The combination of the first output and second output may thus form a unit output.

The method may comprise controlling the first output of each heating unit to regulate a total system output (a combination, or addition, of all unit outputs).

The method may comprise monitoring a unit output from each heating unit to determine the total system output, and controlling the first output in each unit such that the total system output does not exceed a predetermined limit.

The method may comprise monitoring, in each unit, at least one condition of the primary fluid and controlling the first output of each heating unit, to regulate the total system output.

The invention may also provide a computerised method of regulating (or controlling) a fluid-heating system, the fluid-heating system as described in any form above. For example, the method may comprise receiving signals indicative of unit output from each heating unit in the system; calculating the total system output by combining (or adding) the unit outputs from each heating unit; comparing the total system output with a predetermined limit; outputting (or sending) a signal to each unit, such that each unit reduces its first output.

The invention may provide a computer programme for carrying out the method in the preceding paragraph. The invention may provide a computer-readable medium comprising a set of instructions which, when installed in a computer, the computer carries out the method of the preceding paragraph. The invention may provide one or more computers for carrying out the method of the preceding paragraph.

The invention may provide one or more computers configured to control the fluid-heating system, the system as described in any form above.

The invention may provide a system substantially as described herein, with reference to the accompanying drawings.

The invention may provide a heating unit substantially a described herein, with reference to the drawings.

The invention may provide a method substantially as described herein, with reference to the drawings.

### Description of Specific Embodiments of the Invention

Embodiments of the invention will now be described, by way of example, with reference to the accompanying drawings, in which:
Figure 1 is a schematic diagram of a system according to the present invention; and
Figure 2 is a schematic diagram of an alternative unit that could be employed in the system of figure 1.

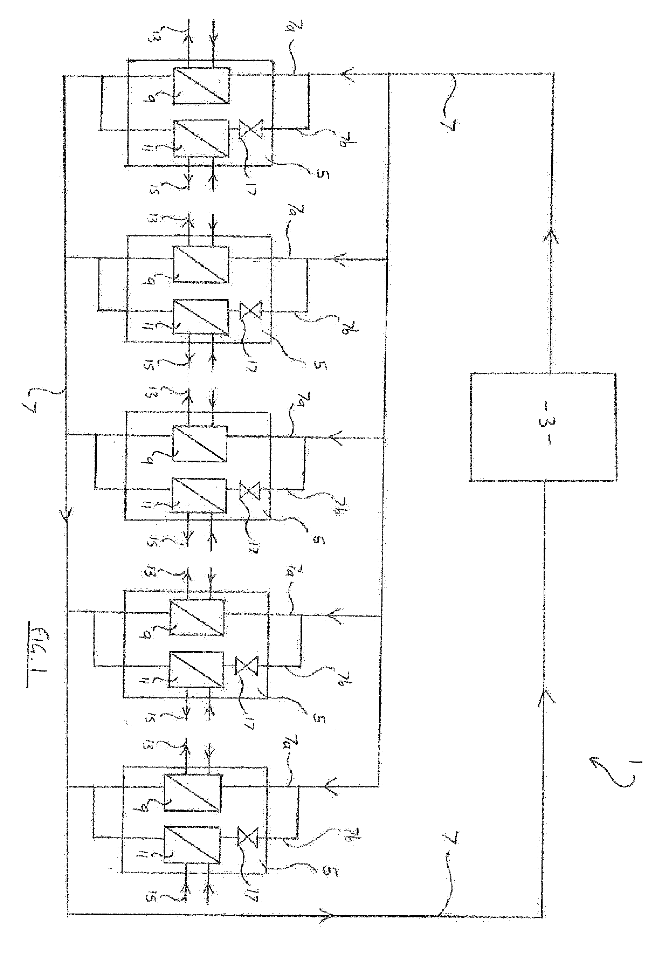

A water-heating system, as shown in figure 1, is a district heating network. The system 1 has a source of heated primary fluid, in the form of a central boiler plant 3 and five HIUs 5. A primary fluid circuit 7 connects the central boiler plant with each HIU. Each HIU has a central heating (CH) heat exchanger 11 and a domestic hot water (DHW) heat exchanger 9.

The primary fluid circuit 7 passes through the CH heat exchanger 11 and DHW heat exchanger 9 of each HIU 5. In the embodiment of figure 1, the primary fluid circuit 7 splits into a CH branch 7b and a DHW branch 7a, such that the CH heat exchanger and DHW heat exchanger are arranged in parallel. At each HIU, a CH circuit 15 passes through the CH heat exchanger and a DHW circuit 13 passes through the DHW heat exchanger.

Each HIU 5 comprises a means for monitoring the unit output, or energy transfer rate (not shown) and each HIU is in communication with a central server (not shown). The CH branch 7b of the primary circuit 7 in each HIU has a modulating valve 17. In practice, the DHW branch 7a also has a modulating valve (not shown) which controls flow of the prmary fluid through the DHW branch.

In use, primary fluid is heated by the central boiler plant 3 and is circulated in the primary circuit to each HIU 5. At each HIU, the heat from the primary fluid can be transferred to CH fluid at the CH heat exchanger 11 to generate a CH output (or first output) and/or to DHW at the DHW heat exchanger 9 to generate a DHW output (or second output).

Each HIU has a unit output depending on the extent to which the CH fluid and DHW is being heated at each HIU 5. The unit output is thus a combination of the CH output and DHW output. The central server monitors the unit output of each HIU and calculates the total system output. The server can then compare the total system output to a set peak load (or predetermined limit) which the system can deliver. To prevent the total system output exceeding the set peak load, the server communicates limitations to each HIU. Each HIU in the network can then reduce the heating of CH fluid at the CH heat exchanger 11 (i.e. reduce the CH output). In the system of figure 1, this is achieved by restricting the flow rate of the primary fluid through the CH branch 7b of the primary circuit. The valve 17 in the CH branch controls the flow rate to this effect. So, there is a temporary reduction in transfer of heat to CH fluid in every HIU in the system. Consequently, the system can operate with a considerably lower set peak load than it otherwise would have to. This concept is demonstrated in examples 1 and 2 below.

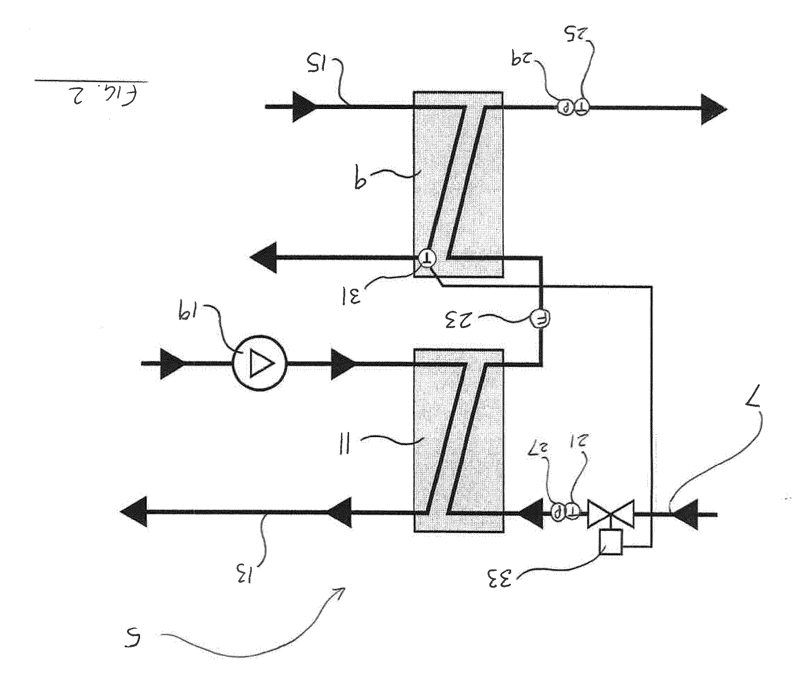

The HIU as shown in figure 2, can be used as an alternative to the HIU in figure 1 (described above). Similar features have been assigned like reference numerals. Rather than the CH heat exchanger 11 and the DHW heat exchanger 9 being arranged in separate branches 7b, 7a of the primary circuit 7, they are arranged in series such that primary fluid passes through the CH heat exchanger before passing through the DHW heat exchanger.

The HIU has a variable speed pump 19 arranged to vary the flow rate of the CH fluid flowing through the CH heat exchanger 11. There is a primary in temperature sensor 21 arranged to monitor the temperature of the primary fluid entering the CH heat exchanger; a primary out temperature sensor 25 directed arranged to monitor the temperature of the primary fluid flowing from the DHW heat exchanger 9, and a primary flow sensor 23 arranged to measure the flow rate of the primary fluid through the CH and DHW heat exchangers.

In addition, there is a primary in pressure sensor 27 arranged to measure pressure of primary fluid entering the HIU 5, and a primary out pressure sensor 29 arranged to measure pressure of primary fluid flowing from the HIU. A DHW out temperature sensor 31 is arranged to measure temperature of mains-pressure water leaving the DHW heat exchanger 9 and a primary flow controller in the form of a modulating valve 33 is arranged to vary the flow rate of the primary fluid through the HIU.

In use, the readings from the primary in temperature sensor 21, primary out temperature sensor 25 and primary flow sensor 23 provide an indication of the HIU output. This information can be communicated to a server. The server may then effect the variable speed pump 19 to adjust the flow rate of the CH fluid through the CH heat exchanger. For example, decreasing the flow rate of the CH fluid can decrease the extent to which the CH fluid is heated (and thus decrease CH output).

The flow rate of the primary fluid through the HIU 5 is controlled by the modulating valve 33 in response to temperature sensed by the DHW out temperature sensor 31. This ensures that the DHW is heated to a desired temperature, say 55°C.

The presence of the primary in and primary out pressure sensors 27, 29 and the primary in temperature sensor 21 means that the HIU 5 of figure 2 could be incorporated into a system as described in examples 3 and 4 below. For example, these sensors are able to monitor when the system load exceeds its limits which may be reflected in the primary fluid experiencing a drop in temperature and/or a drop in pressure. This may avoid the need to calculate or pre-program a predetermined limit for the system (see example 3) or avoid the need to provide an electronic communication network including, for instance, a server or peer-to-peer network (see example 4).

The system could be arranged such that if there is a drop in primary fluid temperature sensed by the primary in temperature sensor 21 and/or a drop in pressure sensed by the primary in and primary out pressure sensors 27, 29, the variable speed pump reduces its flow rate and thus reduces CH output. The primary in temperature sensor and primary in/primary out pressure sensors may thus be in electronic communication with the variable speed pump. All HIUs in the system may simultaneously make this adjustment such that the total system output is reduced.

### Example 1

A district heating network is provided with 10 flats, each flat having a HIU.

We may assume a DHW load (or output, or allowance) per flat of 35kW, and a CH load (or output, or allowance) of 8 kW per flat.

Peak CH load: 10 x 8 = 80 kW (each HIU may be providing CH if the weather is cold enough)

Peak DHW load at 25% diversity (i.e. assuming a maximum of 25% taps will ever run simultaneously): 10 x 35 x 0.2 = 87.5 kW
- Without any allowance for DHW priority, one would provide a system with a peak system load (DHW + CH) of 167.5 kW.
- If individual HIUs provide 100% DHW priority (i.e. when there is a demand for DHW in a particular HIU, that particular HIU stops providing heated CH fluid), there would be a 25% reduction in DHW from the 25% of HIUs running DHW, with a peak system load of 147.5 kW (i.e. a saving of 20 kW)
- If all HIUs in the system have networked-managed DHW priority, and every HIU stops providing heated CH fluid, it is possible to cover peak DHW demand with a peak system load of 87.5 kW.

If the system sets a predetermined peak system load of 100 kW, then when the peak DHW load of 87.5 kW is required, there will still be 12.5 kW left to be shared across each HIU for central heating.

Every time the DHW or CH load on an HIU changes, the new values will be communicated to the other nine HIUs though the network. Every HIU will therefore monitor the individual and total loads on the network.

Each HIU will therefore reduce its CH load by the necessary amount to ensure the peak system load is not exceeded.

When one HIU of the ten runs DHW at 35kW, and all ten HIUs are drawing 8kW heating, each HIU will adjust their CH load, as follows:
CH Load: (100 - 35) / 10 = 6.5 kW.

So, the HIU drawing hot water will limit its unit load to 35 + 6.5 = 41.5 kW and the other nine HIUs will limit CH load to 6.5 kW.

With a peak system load of 100 kW, compared to a peak system load of 167.5 kW, the central boiler plant can afford to be significantly smaller in size.

If a WiFi or Ethernet network is used to connect HIUs together, the system would typically perform a network scan to work out how many HIUs are connected to the network, and to obtain a list of IP addresses to broadcast to (each HIU being assigned an IP address).

The peak system load will typically be set at installation, or adjusted by remote access to HIUs over the network.

### Example 2

A district heating network is provided with 50 properties, each property having a HIU. We may assume a DHW load per property of 35kW, and a CH load per property of 4 kW. 50 properties.

Peak DHW load at 12% diversity = 210 kW
Peak CH load = 200 kW

In a district heating network with a peak system load of 410 kW, one approach would be to fit a central boiler plant with a 250 kW capacity with a buffer store to provide additional stored heat at times of peak system load.

However, using networked hot water priority it would be possible to run the network without the need for a buffer store, making up the peak hot water load by shutting down heating loads to 0.8 kW (20%).

An additional advantage is that with the peak load from the central plant dropping to 250 kW, the pipework and pump sizing becomes significantly smaller, thus reducing costs.

### Example 3

The peak system load could be calculated during operation, rather than be pre-set or predetermined. This could be achieved by initially running the system without any imposed limits.

At such a time that the system load exceeds its limits, the result would typically be seen as either a drop in temperature of primary fluid (if the limit is the heat input), or as a drop in supply pressures (if the limit is on, for example, pipe sizes or pump size).

When one of these conditions is detected by an HIU, the system limits will have been reached and this limit can be communicated to all HIUs in the network. Every HIU may then adjust their CH output accordingly.

### Example 4

This is the same as example 3, except that information is not broadcast, or communicated to other HIUs. Instead, HIUs act on limits they calculate from the sensed primary fluid temperatures and pressures. The effect will still be that all HIUs in the system reduce their heating loads at times of peak, to provide hot water priority.

With reference to, but further expanding on, example 1, the boiler plant should be achieving 80°C under normal conditions. HIUs in the system can be programmed to reduce their heating load proportionally to the primary fluid temperature. With a primary fluid temperature lower than 70°C, it is known that DHW performance will start to be adversely affected, so the HIUs are configured to vary CH output between 100% with flow at 80°C, and 0% at a flow of 70°C.

So, with a 50kW CH heating load (5kW per property), the DHW load suddenly increases to 60kW, putting a demand of 110kW on the 100kW supply. The temperature increases on the primary fluid through the boiler will drop and the primary fluid temperature will drop to approximately 78°C. At this point the HIUs, detecting the drop, will calculate that they should drop CH output by 80%, thereby reducing the network load by 10kW, and bringing the system into balance. As primary fluid temperatures begin to rise, each HIU will climb back to 100% output.

## Claims

1. A fluid-heating system, comprising:
a) a plurality of heating units in which each heating unit is configured to generate, in use, a first output of a heated fluid and/or a second output of a heated fluid, the combination of the first and second outputs generating a unit output and the combination of unit outputs from each unit generating a total system output, and in which each heating unit comprises a controller for controlling its first output; and
b) a source of the heated primary fluid arranged to supply the heated primary fluid to each heating unit, such that each heating unit can utilise the heated primary fluid to generate its first and second outputs,
in which the system is configured to regulate the total system output by controlling the first output of each heating unit.

2. A system according to claim 1, in which each heating unit comprises one or more output sensors for sensing the unit output of the heating unit, and in which the system is configured to regulate the first output of each heating unit such that the total system output does not exceed a predetermined limit.

3. A system according to any preceding claim, in which each heating unit is arranged to communicate its unit output to a server, such that in use, the server can detect the total system output, compare the total system output to a predetermined limit, and effect a reduction in the first output in each heating unit to prevent the total system output exceeding the predetermined limit.

4. A system according to any of claims 1 or 2, in which the plurality of heating units forms a peer-to-peer network arranged to monitor the total system output, compare the total system output to a predetermined limit and communicate to each heating unit to effect a reduction in the first output of each heating unit to prevent the total system output exceeding the predetermined limit.

5. A system according to claim 1, in which each heating unit comprises one or more sensors arranged to sense at least one condition of the primary fluid, optionally in which i) each heating unit comprises a temperature sensor and/or a pressure sensor arranged to sense the temperature and/or pressure of the primary fluid, and/or ii) in which the controller of each heating unit is arranged to control the first output in response to the at least one condition of the primary fluid, and thus regulate the total system output.

6. A system according to any preceding claim in which each heating unit is configured to generate the first output by either supplying secondary fluid that has been heated by the heated primary fluid, or by supplying the heated primary fluid, and is configured to generate the second output by supplying tertiary fluid that has been heated by the heated primary fluid,
preferably in which each heating unit comprises:
a first heat exchanger for transferring heat from the heated primary fluid to the secondary fluid; and
a second heat exchanger for transferring heat from the heated primary fluid to the tertiary fluid,
more preferably in which each heating unit comprises a primary conduit for conveying a primary fluid through the first heat exchanger and/or through the second heat exchanger; a secondary conduit for conveying a secondary fluid through the first heat exchanger; and a tertiary conduit for conveying tertiary fluid through the second heat exchanger.

7. A system according to any preceding claim, in which the first output is a central heating output and the second output is a domestic hot water output.

8. A system according to claim 6 or claim 7, in which the controller for controlling the first output is a flow rate controller arranged to control the flow rate of the primary or secondary fluid through the heating unit.

9. A system according to any preceding claim, in which the controller for controlling the first output is a valve or a variable speed pump.

10. A heating unit configured for use in a system as defined in any preceding claim.

11. A method for controlling fluid heating, comprising:
providing a plurality of heating units;
supplying a heated primary fluid to each heating unit such that each heating unit generates a first output of a heated fluid and/or a second output of a heated fluid, a combination of the first output and the second output generating a unit output, and a combination of the unit outputs from each heating unit generating a total system output; and
controlling the first output of each heating unit to regulate the total system output, optionally wherein the method comprises
i) monitoring the unit output from each heating unit to determine the total system output, and controlling the first output of each heating unit such that the total system output does not exceed a predetermined limit, or
ii) monitoring at least one condition of the primary fluid and controlling the first output of each heating unit, to regulate the total system output.

12. A computerised method of regulating a system as defined in any of claims 1 to 9, comprising:
receiving signals from each heating unit, each signal representing the unit output;
calculating the total system output;
comparing the total system output with a predetermined limit;
sending signals to each heating unit, such that each heating unit reduces its first output.

13. A computer programme for carrying out the method of claim 12.

14. A computer-readable medium comprising a set of instructions which when installed in a computer, carries out the method of claim 12.

15. One or more computers for carrying out the method of claim 12.
